(19) **Europäisches Patentamt / European Patent Office / Office européen des brevets**

(11) **EP 4 389 237 A1**

(12) **EUROPEAN PATENT APPLICATION**
published in accordance with Art. 153(4) EPC

(43) Date of publication:
**26.06.2024 Bulletin 2024/26**

(21) Application number: **21954363.4**

(22) Date of filing: **08.12.2021**

(51) International Patent Classification (IPC):
*A62C 37/00* (2006.01)  *A62C 3/00* (2006.01)
*A62C 35/58* (2006.01)  *A62C 99/00* (2010.01)

(52) Cooperative Patent Classification (CPC):
**A62C 3/00; A62C 35/58; A62C 37/00; A62C 99/00**

(86) International application number:
**PCT/RU2021/000547**

(87) International publication number:
**WO 2023/022618 (23.02.2023 Gazette 2023/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.08.2021 RU 2021124355**

(71) Applicants:
• **Joint Stock Company "Rosenergoatom"**
  **Moscow 109507 (RU)**
• **Obschestvo S Ogranichennoy Otvetstvennostyu "PTO-PTS" (OOO "PTO-PTS")**
  **g. Podol'sk, derevnya Slaschevo, 142184 (RU)**
• **Obschestvo s Ogranichennoy Otvetstvennostyu "Inzhenerniy Tsentr Pozharnoy Robototekhniki "Efer"**
  **Respublika Kareliya, g. Petrozavodsk, 185031 (RU)**

• **Aktsionernoe Obschestvo "Pozhgidravlika" (AO "Pozhgidravlika")**
  **obl., g. Miass, 456320 (RU)**
• **Science and Innovations - Nuclear Industry Scientific Development, Private Enterprise**
  **Moscow, 119017 (RU)**

(72) Inventors:
• **KHAREVSKIY, Valeriy Andreevich**
  **Ramenskoe, 140103 (RU)**
• **GORBAN', Yuriy Ivanovich**
  **Petrozavodsk, 185005 (RU)**
• **NEMCHINOV, Sergey Georgievich**
  **Petrozavodsk, 185005 (RU)**
• **BURDIN, Alexandr Mikhaylovich**
  **Chelyabinsk, 454080 (RU)**
• **GAYNANOV, Valeriy Feliksovich**
  **Miass, 456303 (RU)**

(74) Representative: **Osmans, Voldemars et al**
**Agency Tria Robit**
**P.O. Box 22**
**LV-1010 Riga (LV)**

(54) **MULTI-FUNCTIONAL ROBOTIC SYSTEM FOR CONTROLLING FIRE EXTINCTION AT INDUSTRIAL SITES**

(57)    A robotic monitoring, detection and fire extinction control system comprises a pumping station, a fire main and at least two robotized fire extinguishing units connected to the fire main comprising a fire monitor with drives for vertical and horizontal aiming and a head with a drive for adjusting the spray angle of the jet. Mounted at an inlet upstream of the fire monitor is a butterfly valve with a drive, and mounted at the outlet of the fire monitor, upstream of the head, are a pressure sensor and a portable control console that are connected to a switching unit at the inlet and, via a network controller, to a control device at the outlet. Mounted on the fire monitor is a fire detection and video surveillance device that is connected to a signal processing device that is connected to a video monitor device and to a process control system that are connected to a control device that is connected via a receiving and control device to fire alarms. A foam generating unit is connected to the robotized fire extinguishing units by a foam conduit; additional reserve pipes, connected to the robotized fire extinguishing units, are provided for supplying water and compressed air foam; and an additional controllable butterfly valve, mounted on the foam conduit, is provided and has a drive connected to the switching unit. The head is designed to be capable of supplying water and compressed air foam at a controlled concentration and rate.

EP 4 389 237 A1

Fig. 1

**Description**

TECHNICAL FIELD OF THE INVENTION

The invention relates to fire protection and fire extinguishing devices, namely to robotic fire extinguishing installations, and can be used for prevention and avoidance of fire hazardous situations in any production rooms, as well as in the internal areas of nuclear power plant (NPP) structures, including NPP machine halls.

PRIOR ART

Robotic fire extinguishing installations are known, for example, a robotic fire complex according to patent No. 2319530. Their disadvantage is the use of a large volume of fire extinguishing agents (FEA), disproportionate to the source of fire when extinguishing full consumption with a set supply time.

The closest in technical essence is a robotic fire system with a full-process control system according to patent No. 2424837.

The well-known robotic fire system contains two or more robotic fire extinguishing installation comprising a fire monitor with drives for vertical and horizontal aiming, a head with a drive for adjusting the spray angle of the jet, a butterfly valve with a drive, a pressure sensor and a portable control console connected to a switching unit at the inlet, via a network controller, to a control device at the outlet, as well as a fire detection and video surveillance device mounted on the monitor connected to a signal processing device that in turn is connected to a video monitor device and a process control system connected to a control device that is connected via a a receiving and control device to fire alarms.

The disadvantage of this robotic fire system is the narrow scope of its application, limited by the technical and functional capabilities of the device, as well as FEA used in its operation, and, accordingly, the range of tasks to be solved to protect sites from fires. The use of water as a fire extinguishing agent does not allow extinguishing the ignition of electrical equipment. In addition, a large amount of water is consumed to extinguish a fire, which leads to flooding of rooms and equipment. With a large fire source, the collapse of the building structures is possible. Also, the prior art does provide for monitoring system for potential fire sources, such as bearing assemblies, local sections of electrically conductive networks, leaks of flammable and explosive liquids and gases. Another disadvantage of the prior art is also the lack of a function to prevent fire and explosion hazards.

ESSENCE OF THE INVENTION

The objective of the present invention is to prevent the collapse of production rooms, and, consequently, severe accidents, to ensure fire protection of production rooms depending on the fire source through the use of various fire extinguishing agents, such as compressed air-filled foam (compressed air foam), water, nitrogen-water compositions, as well as the use of IR cameras and / or thermal imaging cameras as fire detection and video surveillance devices.

The technical result of the present invention is the expansion of the functionality of the robotic fire system, including the prevention of fire and explosion situations in production sites, the reduction or the elimination of emergencies, the prevention of collapses, the monitoring of potentially hazardous areas of fire and the fire extinguishing control.

Depending on the fire source, its location and the intensity of its combustion, using the proposed invention it is possible to use not only robotic fire extinguishing installations, but also compact sprayers, spot sprinklers, small-sized robotic installations, small-sized mobile robotic installations and internal fire hydrants.

Also, the technical result of the claimed invention can be attributed to reducing the time to eliminate the fire from the moment of detection, preventing re-ignition or ignition, reducing the consumption of fire extinguishing agents and, therefore, reducing the damage caused due to fire extinguishing and elimination of fires.

The technical result is achieved due to the fact that the multi-functional robotic system for preventive monitoring, fire detection and fire extinguishing control of production sites comprising a pumping station, a fire main connected to it, at least two robotized fire extinguishing installations connected to the fire main and comprising a fire monitor with drives for vertical and horizontal aiming and a head with a drive for adjusting the spray angle of the jet, a controlled butterfly valve with a drive mounted at an inlet upstream of the fire monitor, a pressure sensor and a portable control console mounted at the outlet of the fire monitor, upstream of the head, connected to a switching unit at the inlet, and, via a network controller, to a control device at the outlet with a control device, mounted on the fire monitor is a fire detection and video surveillance device that is connected to a signal processing device that is connected to a video monitor device and to a process control system that are connected to a control device that is connected via a receiving and control device to fire alarms, according to the present invention, it is equipped with a foam generating unit connected to robotic fire extinguishing installations by a foam conduit, additional reserve pipes for supplying water and compression air foam connected to robotic fire extinguishing installations, installed on the foam conduit in front of the fire monitor entrance with an additional controlled butterfly valve with an additional drive connected to the switching unit, and the head is designed to be capable of supplying water and compressed air foam at a controlled concentration and rate.

The multi-functional system is mainly equipped with position sensors for controlled butterfly valves mounted on the main and foam conduit.

The multi-functional system can be equipped with at least one small-sized robotic fire extinguishing installation connected to the main and foam conduit and connected to the control device installed in the passage and / or in the area not covered by robotic fire extinguishing installations.

Also, the system can be additionally equipped with at least one small-sized mobile robotic fire extinguishing installation connected to the foam conduit comprising an autonomous control system and a telescopic manipulator connecting a fire hose with a connecting head with water shut-off valves with a movable seat.

The multi-functional robotic system can be additionally equipped with fire hydrants connected to the foam conduit with hand monitors and controlled valves equipped with position sensors.

Also, the system is mainly equipped with an automatic water or foam fire extinguishing system equipped with forced-start sprayers and connected to a sprayer control device and a fire detection and video surveillance device.

In addition, the system can be additionally equipped with portable nitrogen-water fire extinguishing installations connected by fire hoses to the fire main comprising a liquid nitrogen ejector connected by a vacuum pipeline to a container containing liquid nitrogen.

Advantageously, the multi-functional system is provided with a jet control unit connected to a process control system.

The system can be equipped with a subsystem for irrigation of floors of production rooms taking into account the heating temperature of supporting structures, connected to the process control system, as well as a unit for optimizing the parameters of the foam generating plant, connected to the control device and position sensors of controlled butterfly valves and controlled valves.

The multi-functional system is mainly equipped with a preventive monitoring system and a blitz monitoring system connected to a signal processing device, as well as a remote access system for fault diagnosis, database correction and event logging connected to the control device.

Also, the multi-functional system can be equipped with an adaptive fire extinguishing control unit connected to the process control system, as well as a gas concentration control system connected via a network controller to the control device to which gas analyzers are connected.

One of the distinguishing features of the multi-functional robotic system is that it has the ability to connect a small-sized mobile robotic fire extinguishing installation comprising an autonomous control system and a telescopic manipulator connecting a fire hose with a connecting head with water shut-off valves with a movable seat. This mobile installation can be used for reconnaissance in the fire (accident) zone, for adjusting the use of robotic fire extinguishing installations and searching for victims, extinguishing local fires and protecting process equipment in areas inaccessible to robotic installations, as well as measuring the level of radiation contamination in the work area with transmission of operational information to the operator.

To extinguish small, local fire sources, the multi-functional robotic system contains an automatic water or foam fire extinguishing system equipped with forced-start sprayers and connected to a sprayer control device and a fire detection and video surveillance device.

Equipping the multi-functional robotic system with a jet supply control unit and a subsystem for irrigation of floors of production rooms taking into account the heating temperature of the supporting structures, connected to the process control system, allows robotic fire extinguishing installations to have an additional function that makes it possible to work in the line jet extinguishing mode with optimization and control of extinguishing parameters and in the directional irrigation mode. This function is used to cool supporting structures, to prevent their collapse, as well as to reduce the concentration and dilution of explosive and flammable gases due to atomized fine water droplets.

The unit for optimizing the parameters of the foam generating unit, connected to the control device and position sensors of controlled butterfly valves and controlled valves, allows to change the concentration of compressed air foam (low and medium expansion), depending on the fire extinguishing task.

Compressed air foam has a homogeneous structure without a residual liquid phase of an aqueous solution of a foaming agent and is produced by mixing water with a foaming agent, and air, nitrogen or carbon dioxide supplied under pressure can be used as a filler.

The multi-functional robotic system is equipped with fire detection and video surveillance devices, for example, IR cameras and/or thermal imaging cameras, connected to a preventive monitoring system and a blitz monitoring system connected in turn to a signal processing device. This solution allows monitoring and blitz monitoring to detect fire sources (heat release) and open combustion centers in the protected area using fire alarms that transmit information to the operator at the work station.

Equipping the multi-functional robotic system with a gas concentration control system connected via a network controller to the control device to which gas analyzers are connected makes it possible to carry out preventive monitoring of the fire (emergency) situation in protected area with control of the specified parameters for the presence and concentration in the air of explosive and toxic gases (hydrogen, methane, hydrogen sulfide, etc.) with the transfer of information to the operator at the work station. In case of increased concentration of explosive and toxic gases and triggering at the location of the gas analyzer, atomized water is supplied to this zone to discharge the concentration of gases, and the supply can be carried out both automatically and remotely.

The use of the multi-functional robotic system at protection sites, including NPP production rooms and machine halls, is designed to minimize possible threats to the life and health of firefighters and personnel involved in fire and accident elimination, where the impact of not only fire hazards (flame, sparks, high temperatures, toxic combustion products and smoke), but also ionizing radiation in conditions of radiation accidents is possible.

Extinguishing of a detected fire source can be carried out in automatic, remote and / or local control mode using robotic fire extinguishing installations, small-sized robotic fire extinguishing installations, forced-start sprayers, directional sprinklers, a small-sized mobile robotic fire extinguishing installation, portable nitrogen-water fire extinguishing installations and internal fire hydrants, and compressed air foam, nitrogen-water compounds or water can be used as FEA.

The introduction of the multi-functional robotic system is possible not only at protection sites to be designed and under construction, but also the integration of its components into the existing fire water supply system at existing sites, which is an undoubted advantage of the system.

In this regard, taking into account the possibility of using the tactical and technical characteristics of both all and individual components of systems and tools embedded in the multi-functional robotic system, they can significantly expand the scope of its effective application not only in NPP machine halls, but also in machine halls of traditional energy sites, as well as other sites of nuclear energy and defense industry, assembly shops in the shipbuilding, aviation, space industries, waste processing plants, gas and petrochemical warehouses and other unique sites.

The proposed technical solution, a multi-functional robotic system for preventive monitoring, fire detection and fire extinguishing control of production sites, is illustrated by an example of a specific embodiment described below. The example presented is not the only possible one, but clearly demonstrates the possibility of achieving the claimed technical result with the given totality of essential features of the invention.

LIST OF FIGURES, DRAWINGS, AND OTHER MATERIALS

The essence of the present invention is illustrated by a drawing, which shows a diagram of a multi-functional robotic system for preventive monitoring, fire detection and fire extinguishing control of production sites using the example of its placement in the NPP machine hall.

DETAILS CONFIRMING THE FEASIBILITY OF EMBODIMENT OF THE INVENTION

A multi-functional robotic system for preventive monitoring, fire detection and fire extinguishing control of production sites contains a pumping station to which a fire main 1 is connected, at least two robotic fire extinguishing units 2 connected to the fire main 1, comprising a fire monitor 3 with a vertical aiming drive 4 and a horizontal aiming drive 5, a head 6 with a drive for adjusting the spray angle of the jet, controlled butterfly disk 7 with a drive installed upstream of the fire monitor 3, a pressure sensor 8 installed at the outlet of the fire monitor 3 upstream of the nozzle 6, a portable control console 9.

All these components are connected to a switching unit 10 at the inlet and, via a network controller 11, with a multi-functional robotic system control device 12 at the outlet.

A fire detection and video surveillance device 13 is installed on the fire monitor 3, connected to a signal processing device 14, the output of which is connected to a video control device 15 and a process control system 16 connected in turn to the multi-functional robotic system control device 12.

In turn, the multi-functional robotic system control device 12 is connected via a receiving and control device 17 with fire alarms 18.

Additionally, the multi-functional robotic system is equipped with a foam generating unit 19 of compressed air foam connected to robotic fire extinguishing units 2, a foam conduit 20, additional reserve pipes for supplying water and compressed air foam connected to robotic fire extinguishing units 2, as well as an additional controlled butterfly valve 21 with an additional drive and position sensors mounted on the foam conduit 20 in front of the entrance to the fire monitor 3, connected to the switching unit 10. At the same time, the head 6 is configured to supply water and compressed air foam with adjustable concentration and rate.

In addition, the multi-functional robotic system may include:

- a small-sized robotic fire extinguishing installation (not shown in the diagram) installed in the aisle and / or in an area not covered by robotic fire extinguishing installations and connected to the fire main 1 and the foam conduit 20 and connected to the control device 12;
- a small-sized mobile robotic fire extinguishing installation 22 connected to the foam conduit 20 with an autonomous control system and a telescopic manipulator 23 connecting a fire hose 24 with a connecting head with water shut-off valves 25 with a movable seat;
- fire hydrants 26 connected to the foam conduit 20 with hand monitors and controlled valves 27 equipped with position sensors 28,
- an automatic water or foam fire extinguishing system equipped with forced-start sprayers 29, associated with a sprayer control device 30 and a fire detection and video monitoring device 13;
- portable nitrogen-water fire extinguishing installations connected by additional fire hoses to the fire main 1 comprising a liquid nitrogen ejector connected by a vacuum pipeline 31 to a container 32 containing liquid nitrogen.

Also, the multi-functional robotic system can be equipped with:

- a jet control unit 33 connected to a process control system 16; subsystem 34 for irrigation of floors of production rooms (sites) taking into account the heating temperature of the supporting structures, connected to the process control system 16;
- a unit 35 for optimizing the parameters of the foam generating unit, connected to the control device 12 and position sensors of controlled butterfly valves and controlled valves 27;
- a preventive monitoring system 36 and a blitz monitoring system 37 connected to a signal processing device 14;
- a remote access system 38 for fault diagnosis, database correction and event logging connected to the control device 12;
- an adaptive fire extinguishing control unit 39 connected to the process control system 16;
- a gas concentration control system 40 connected via a network controller 11 to a control device 12, to which gas analyzers 41 are connected.

The multi-functional system in one of the embodiments is equipped with a control device 12 installed at an work station and connected to communication units 10 on robotic fire extinguishing installations 2 via a communication channel 42, for example, RS-485, through a network controller 11 and through a receiving and control device 17 with fire alarms 18, and a digital signal processing device 14 is connected by a two-channel television communication 43 (video channel and IR channel) with a fire detection and video monitoring device 13, with a video control device 15 and a process control system 16, which is connected to the control device 12. The system is also equipped with a control unit 44, sections 45 of the spray network, directional sprinklers 46. Portable nitrogen-water fire extinguishing installations contain fire monitors 47 with liquid nitrogen ejection, which are delivered to the fire site and connected by fire hoses to the nearest fire hydrant 48 on the fire main 1.

The multi-functional robotic system for preventive monitoring, fire detection and fire extinguishing control of production sites operates as follows. When zones heated to the ignition temperature appear at the protection site, for example, as a result of faulty devices, the system 36 of preventive monitoring according to the program for recognizing heat release zones, taking into account the digitized location of probable coolants (cable routes, electrical appliances, switches, process equipment, etc.), transmits information to the control device 12, which sends commands to the nearest robotic fire extinguishing installations 2 to point them at the selected heat release zone and transmits to a 24-hour duty operator to the video monitoring device 15 information about the emergency state of the surveillance zone section and the likely source of heat release.

The control device 12 through the network controller 11 is also connected to the gas concentration control system 40, to which the gas analyzers 41 are connected.

For example, hydrogen (H2) with a molar mass $M = 2$ g/mol is much lighter than air, so it will rise to the top of the room, so gas analyzers 41 should be installed near the floor. Their arrangement and number should comply with the standards for the installation of signaling devices and gas analyzers for monitoring pre-explosive and maximum permissible concentrations of chemicals in the air of production rooms, but not less than 1 sensor per 100 m$^2$.

In this regard, the protected sites is also under continuous control of the gas analyzers 41.

It is known that emergency situations at turbogenerators associated with depressurization of the gas-oil system and subsequent significant leaks of combustible turbine oil and hydrogen can develop according to the boundary scenarios "explosion - fire" or "fire - explosion". According to the first path of fire development, when the oil seal of the generator shaft is destroyed, a high-temperature (above 2000 °C) hydrogen burning with oil occurs, and according to the second, the most likely cause of the explosion is the accumulation of hydrogen at the top of the machine hall with a significant leak.

Hydrogen, when mixed with air, forms an explosive mixture, the so-called detonating gas. Explosive concentrations of hydrogen with air occur at a volume ratio of 4% or more, the lower flammability level (LFL). The pre-explosion concentration (PEC) of hydrogen content in the air of the working area is controlled by 2 alarm thresholds: the first threshold is warning - 0.4% vol. (10% LFL) and the second threshold - emergency - 0.8% vol. (20% LFL).

When the first alarm warning threshold is triggered, information from the gas concentration control system 40 through the network controller 11 enters the control device 12 and is then transmitted to a 24-hour duty operator, who takes measures to eliminate the gas leak. When the second emergency alarm threshold is triggered, the control device 12 sends a command to the nearest robotic fire extinguishing installations 2 to point them at the zone of increased gas concentration at the location of the triggered gas analyzer 41. The robotic fire extinguishing installations 2 supply sprayed water by scanning over the area of the specified zone to discharge the gas concentration.

In order to determine and monitor the performance of all components of the multi-functional robotic system, the system control device 12 is connected to the remote access fault diagnosis system 38.

In preparation for operation, basic parameters are entered into the database of the control device 12 via the remote access fault diagnosis system 38: the configuration of the site with location coordinates of the robotic fire extinguishing installations 2, the consumption Q of the robotic fire extinguishing installations 2, the irrigation intensity $i_n$, the minimum irrigation area $S_{min}$, in accordance with current standards, for example, see SP 485.1311500.2020. These data are sent to the jet supply control unit 33, in which the current and normalized parameters are compared according to the calculation formulas, they are regulated, the jet scanning step over the area is determined depending on the range of the FEA supply for the most effective extinguishing.

In standby mode, the protected site is under constant control of the fire alarms 18, and is periodically monitored by the device 13 for detecting fire and video surveillance mounted on the robotic fire extinguishing installations 2 moving according to a given program. At the same time, all components of the multi-functional robotic system are tested according to the fault-finding program by the remote access diagnostics system 38. Data of current loads, control positions, water pressure, etc. in case of deviation of parameters from the set values are registered and sent via secure communication channels to the console to a 24-hour duty operator.

When a fire source occurs, the fire alarms 18 are triggered, and the receiving and control device 17 sends an "Alarm" signal to the control device 12, which switches the multi-functional robotic system into the fire source search mode using the robotic fire extinguishing installations 2 and sends control signals via the communication channel 42 to the switching units 10 of the robotic fire extinguishing installations 2 to search for the fire source. The drives 4, 5 of vertical and horizontal aiming move the fire monitors 3 in the specified sectors of the zone protected by them.

To improve the performance of the search, the blitz monitoring system 37 is turned on. The entire protected site is divided into search zones for each robotic fire extinguishing installation 2. With this division, simultaneous monitoring is carried out over fixed zones for the entire protected site. Monitoring is carried out by moving the robotic fire extinguishing installations 2 in a horizontal plane in a given zone with a fixed installation of the fire detection and video surveillance device 13 in a vertical plane. To optimize the search, the robotic fire extinguishing installations, for example, move from the edges of the protected sector towards each other. When moving the fire detection and video surveillance device 13 fire sources are identified and, if present, after digital processing of information and determination of angular coordinates, the information is sent to the control device 12.

According to the results of monitoring from all robotic fire extinguishing installations 2, the control device 12 determines the fire source, selects two robotic fire extinguishing installations 2 located optimally close to the fire source, and directs them to the fire source. After pointing, the fire source will be in the focus of the fire detection and video surveillance device 13, which makes it possible to obtain more accurate coordinates, which are sent to the control device 12 via the channel 43 of the two-channel television communication through the signal processing device 14.

Based on the results of the information received, the control device 12 generates control signals over the communication channel 42 about the fire coordinates to the corresponding switching units 10 and sends the "start" command to the process control system 16, and also sends technological commands to the control unit 44 to start the foam generating unit 19, to open the controlled foam drive butterfly valve 21, to transfer the head 6 to the foam position to increase the passage cross-section, to turn off the ventilation, and so on. Compressed air foam via the foam conduit 20 enters the robotic fire extinguishing installations 2, which form and direct a jet of compressed air foam. Sections 45 of the spray network can also be involved and via controlled valves 27, hand monitors and directional sprinklers 46, fire hydrants 26 installed on the foam conduit 20. Signals about their opening are received from the position sensors 28 to the unit 35 for optimizing the parameters of the foam generating unit, which regulates the consumption and pressure of compressed air foam depending on the total consumption of consumers and the specified foam ratio. The aiming of the jet by the robotic fire extinguishing installation 2 at the fire source carried out taking into account the ballistic data of the jet, depending on the elevation angle of the monitor and the pressure in the network, in accordance with the algorithm for aiming the jet to the given coordinates according to the Ballistics program. The jet elevation angle is corrected by the control device 12 according to the data of the pressure sensor 8 on the fire monitor 3, which are received through the switching unit 10 via the communication channel 42 through the network controller 11.

The fire extinguishing is carried out taking into account the changing operational situation according to information from the control device 12 using the adaptive fire extinguishing control unit 39. In the initial stage, up to the fire area $S_n$=12m$^2$, extinguishing is carried out in a repeated short-term mode, in which the extinguishing time $t_T$ is not less than:

$$t_T > .\max = 60 \text{ s,}$$

after which the extinguishing stops and the fire source search mode is switched on.

When an unextinguished fire source is detected or a new source appears, the coordinates of the sources are specified and they are extinguished. After repeated extinguishing, the robotic fire extinguishing installations 2 switch to the fire source search mode before the expiration of the standard extinguishing time in accordance with the group of the protected room. If several sources are detected, a larger source in area is extinguished. If the detected sources are within the same area of 12m$^2$,

then extinguishing is carried out over the entire area. If several sources are detected, a larger source in area is extinguished. When extinguishing the fire source with one robotic fire extinguishing installation 2, the development of the fire is monitored from the neighboring installations. If the fire source is outside the extinguishing zone, the aiming of the robotic fire extinguishing installation 2 is adjusted to the new coordinates. If the fire source is not detected on all fire detection and video surveillance devices 13, the extinguishing stops and all robotic fire extinguishing installations 2 switch into the monitoring mode.

If a fire occurs in the area of the protected room outside the coverage area of the robotic fire extinguishing installations 2, for example, in shady (local) areas that are not accessible to the jet of the robotic fire extinguishing installations 2, according to information from the fire detection and video surveillance devices 13 permanently installed in this area, received via a two-channel television communication 43, the signal processing device 14 identifies the fire, determines its coordinates and transmits information to the control device 12. According to the received data on the coordinates of the fire area, the control device 12 determines the sprayer 29 corresponding to this zone and / or a small-sized robotic fire extinguishing installation (not shown in the diagram), and via the communication channel 42 sends a command to the sprayer control device 30 to forcibly start the selected sprayer 29 and to turn on a small-sized robotic installation. When opening the selected sprayer 29 foam from the foam conduit 20 flows through sections of the spray network 45 to the sprayer 29 and extinguishes the fire.

Information about a fire at the site is transmitted to the duty operator at the constantly attended station. On the screen of the video control device 15, video information via two-channel television communication 43 from the fire detection and video surveillance device 13 after digital processing of the fire source in the digital signal processing device 14 appears as an image of the fire source highlighted in the frame. The duty operator, receiving operational video information, can take control by switching to remote mode.

In addition, to conduct objective reconnaissance in particularly dangerous emergency locations, including the search for people (victims) in the zone of exposure to dangerous factors of fire, with the threat of an explosion and collapse of structures, as well as in extinguishing fires accompanied by radiation or chemical accidents, it is possible to effectively apply small-sized mobile robotic fire extinguishing installation 22 with an autonomous radio or wired control system.

At the command of the operator, the small-sized mobile robotic fire extinguishing installation 22, using a route navigation system, moves to the nearest water intake device in the form of a water shut-off valve with a movable seat 25 on the foam conduit 20 located in the fire zone, parks to it and with a telescopic manipulator 23 docks with it a fire hose 24 with a connecting head.

After connecting to the conduit, the small-sized mobile robotic fire extinguishing installation 22 is sent directly to the fire zone, where it monitors with the determination of the coordinates and area of fire and extinguishes by line scanning of the jet over the source area or protects (cools) technological equipment and supporting structures in local zones.

If necessary, the small-sized mobile robotic fire extinguishing installation 22 carries out reconnaissance in the conditions of the occurrence and development of radiation and chemical accidents at protected sites. In this case, the entire operation of the small-sized mobile robotic fire extinguishing installation 22 can be adjusted by the operator remotely.

To effectively suppress ground fires, it is also possible to use portable nitrogen-water fire extinguishing installations based on fire monitors 47 with liquid nitrogen ejection, which are delivered to the fire site and connected by fire hoses to the nearest fire hydrant 48 on the fire conduit 1. When water is supplied by the fire monitor 47 with liquid nitrogen ejection, the jet is directed to the combustion site, while liquid nitrogen is ejected from the tank 32 through the vacuum pipeline 31, forming a nitrogen-water mixture. In contact with water, as a result of intense boiling due to the sharp evaporation of nitrogen and splashing of water, a white mist is formed, creeping over the surface. Its volume is 700 times the volume of liquid nitrogen. A stable deoxygenated area is created above the fire source, isolated for the time of supply of FEA from oxygen penetration from the environment, with high cooling characteristics from the action of water and nitrogen, which contributes to rapid and effective fire extinguishing.

Under the conditions of fire development in the NPP machine halls, in case of oil burning at the turbine service mark, the supporting structures of cover trusses are exposed to intense heat radiation and heat flows, with high dynamics of heating structures.

Upon a signal of a turbine oil burning fire and confirmation of the signal by a 24-hour duty operator, a control signal is sent to the control device 12, and the robotic fire extinguishing installations 2 using the fire detection and video surveillance devices 13 monitor the machine hall cover trusses in the area where the fire is detected. When heated zones with a temperature of T < 100 ° C appear, the system 36 of preventive monitoring according to the program for recognizing heat release zones, taking into account the digitized location of the supporting structures previously entered into the program, transmits information to the control device 12, which sends commands to the nearest robotic fire extinguishing installations 2 upon their aiming to a dedicated heating zone, to the subsystem 34 for irrigation of the floors of machine halls with control of the heating temperature of the supporting structures and to start the pumping station. The controlled butterfly valves 7 open, and water is supplied via the fire conduit 1 to the robotic fire extinguishing installations 2, which cool the heated zones with scanning water jets.

After set intervals, the water supply is stopped and temperature control is carried out. When areas with an elevated temperature T > 100°C appear in the controlled cooled zone of the supporting structures, determined by the place of operation of the thermal cable installed on the floor trusses (not shown), the irrigation intensity is increased by connecting reserve robotic fire extinguishing installations 2. When information appears about approaching the critical temperature T > 300°C, the control device 12 sends a signal to a 24-hour duty operator about the need to introduce additional funds to create a higher irrigation intensity in the emergency area.

The proposed multi-functional robotic system for preventive monitoring, fire detection and fire extinguishing control of production sites using compression air foam extinguishing technology, its targeted delivery by air to the fire source to any point of the protected space within the jet range, with enhanced functionality based on digital programmable systems, supplemented by other monitoring and fire extinguishing systems integrated into the overall site protection management system, is an effective automatic and remotely controlled means of fighting fires and accidents, which makes it possible to warn of the possibility of a fire or an emergency at the protected site before they occur, and in case of detecting fires at an early stage, direct a powerful flow of compressed air foam at it, and prevent the collapse of the floor structure of production site when a fire develops.

Unlike the known ones, the proposed multifunctional robotic system uses compressed air foam fire extinguishing technologies using the robotic fire extinguishing installations 2. Also the following are additionally integrated in the multi-functional system:

- small-sized robotic fire extinguishing installations (not shown in the diagram);
- small-sized mobile robotic installations 22;
- sprayers 29 with forced start;
- directional sprinklers 46;
- portable nitrogen-water fire extinguishing installations;
- fire hydrants 26 with the use of hand monitors.

In addition, the functionality of the multi-functional robotic system is expanded through the use of unit 35 for optimizing the parameters of the foam generating unit by flow and pressure, unit 33 for controlling the flow of the jet, subsystem 34 for spraying floors of machine halls, taking into account the heating temperature of supporting structures, system 36 for preventive monitoring, system 37 for blitz- monitoring and remote access system 38 for fault diagnosis, adaptive fire extinguishing control unit 39.

These distinctive features of the system make it possible to significantly improve the fire safety of the protected site, ensure monitoring of the situation and immediate detection of fire, and most importantly, free the personnel of the protected site and the fire department from being and extinguishing work in the zones of exposure to hazardous fire factors such as flame, heat flow, smoke, chemically hazardous substances, possible electric shock, exposure to ionizing radiation, and, as a result, eliminate or minimize the risks to their life and health.

At the same time, the multi-functional robotic system is able to significantly increase the efficiency of extinguishing one or more fire sources, reduce the consumption and, accordingly, the amount of fire extinguishing agents used, and in the event of the fire development, prevent the collapse of the supporting structures of the floors, significantly reduce the material damage and costs of restoration of capital structures after its extinguishing.

**Claims**

1.  A multi-functional robotic system for preventive monitoring, fire detection and fire extinguishing control of production sites comprising a pumping station, a fire main connected to it, at least two robotized fire extinguishing installations connected to the fire main and comprising a fire monitor with drives for vertical and horizontal aiming and a head with a drive for adjusting the spray angle of the jet, a controlled butterfly valve with a drive mounted at an inlet upstream of the fire monitor, a pressure sensor and a portable control console mounted at the outlet of the fire monitor, upstream of the head, connected to a switching unit at the inlet, and, via a network controller, to a control device at the outlet with a control device, mounted on the fire monitor is a fire detection and video surveillance device that is connected to a signal processing device that is connected to a video monitor device and to a process control system that are connected to a control device that is connected via a receiving and control device to fire alarms, according to the present invention, it is equipped with a foam generating unit connected to robotic fire extinguishing installations by a foam conduit, additional reserve pipes for supplying water and compression air foam connected to robotic fire extinguishing installations, installed on the foam conduit in front of the fire monitor entrance with an additional controlled butterfly valve with an additional drive connected to the switching unit, and the head is designed to be capable of supplying water and compressed air foam at a controlled concentration and rate.

2.  The multi-functional system according to claim 1, **characterized in that** it is equipped with position sensors for controlled butterfly valves installed on the fire main and foam conduit.

3.  The multi-functional system according to claim 1, **characterized in that** it is additionally equipped with at least one small-sized robotic fire extinguishing installation connected to the fire main and foam conduit and connected to the control device installed in the aisle and / or in the area not covered by the robotic fire extinguishing installations.

4. The multi-functional system according to claim 1, **characterized in that** it is additionally equipped with at least one small-sized mobile robotic fire extinguishing installation connected to the foam conduit, comprising an autonomous control system and a telescopic manipulator connecting a fire hose with a connecting head with water shut-off valves with a movable seat.

5. The multi-functional system according to claim 1, **characterized in that** it is additionally equipped with fire hydrants connected to the foam conduit with hand monitors and controlled valves equipped with position sensors.

6. The multi-functional system according to any one of claims 1 - 5, **characterized in that** it is additionally equipped with an automatic water or foam fire extinguishing system equipped with forced-start sprayers and associated with a sprayer control device and a fire detection and video surveillance device.

7. The multi-functional system according to claim 1, **characterized in that** it is additionally equipped with portable nitrogen-water fire extinguishing installations portable nitrogen-water fire extinguishing installations by additional fire hoses to the fire main, comprising a liquid ejector nitrogen, connected by a vacuum pipeline to a container containing liquid nitrogen.

8. The multi-functional system according to claim 1, **characterized in that** it is additionally equipped with a jet control unit connected to the process control system.

9. The multi-functional system according to claim 1, **characterized in that** it is equipped with a subsystem for irrigation of floors of production rooms, taking into account the heating temperature of the supporting structures, connected to the process control system.

10. The multi-functional system according to claim 1, **characterized in that** it is additionally equipped with a unit for optimizing the parameters of the foam generating unit, connected to the control device and position sensors of controlled butterfly valves and controlled valves.

11. The multi-functional system according to claim 1, **characterized in that** it is equipped with a preventive monitoring system and a blitz monitoring system connected to the signal processing device.

12. The multi-functional system according to claim 1, **characterized in that** it is equipped with a remote access system for fault diagnosis, database correction and event logging connected to the control device.

13. The multi-functional system according to claim 1, **characterized in that** it is equipped with an adaptive fire extinguishing control unit connected to the process control system.

14. The multi-functional system according to claim 1, **characterized in that** it is equipped with a gas concentration control system connected via a network controller to the control device to which gas analyzers are connected.

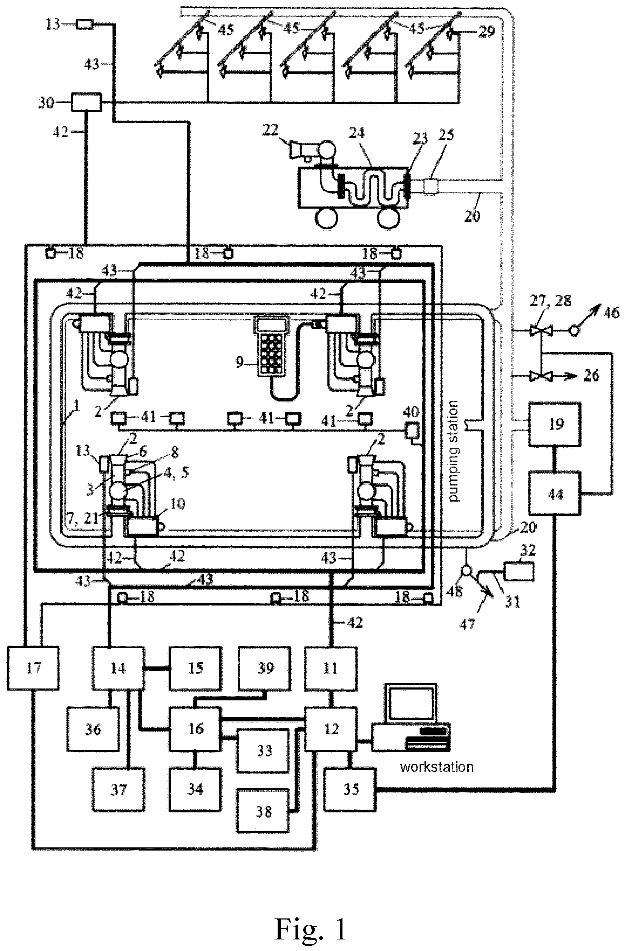

Fig. 1

## INTERNATIONAL SEARCH REPORT

| | International application No. |
|---|---|
| | PCT/RU 2021/000547 |

**A. CLASSIFICATION OF SUBJECT MATTER**
A62C 37/00 (2006.01)   A62C 3/00 (2006.01)   A62C 35/58 (2006.01)   A62C 99/00 (2010.01)

According to International Patent Classification (IPC) or to both national classification and IPC

**B. FIELDS SEARCHED**

Minimum documentation searched (classification system followed by classification symbols)
A62C 3/00, 35/00-35/58, 37/00, 99/00

Documentation searched other than minimum documentation to the extent that such documents are included in the fields searched

Electronic data base consulted during the international search (name of data base and, where practicable, search terms used)

PatSearch (RUPTO Internal), USPTO, PAJ, Espacenet, Information Retrieval System of FIPS

**C. DOCUMENTS CONSIDERED TO BE RELEVANT**

| Category* | Citation of document, with indication, where appropriate, of the relevant passages | Relevant to claim No. |
|---|---|---|
| A | RU 2424837 C1 (ZAKRYTOE AKTSIONERNOE OBSHCHESTVO "INZHENERNY TSENTR POZHARNOY ROBOTOTEKHNIKI "EFER") 27.07.2011 | 1-14 |
| A | RU 2319530 C2 (ZAO "INZHENERNY TSENTR POZHARNOY ROBOTOTEKHNIKI" EFER" ) 20.03.2008 | 1-14 |
| A | CN 201366202 Y (GUOFENG DING) 23.12.2009 | 1-14 |
| A | RU 2739390 C1 (OBSHCHESTVO S OGRANICHENNOY OTVETSTVENNOSTJU "INZHENERNYI TSENTR POZHARNOY ROBOTOTEKHNIKI "EFER") 23.12.2020 | 1-14 |
| A | RU 93284 U1 (ZAKRYTOE AKTSIONERNOE OBSHCHESTVO "INZHENERNY TSENTR POZHARNOY ROBOTOTEKHNIKI "EFER") 27.04.2010 | 1-14 |
| A | EP 2599525 B1 (LIMITED LIABILITY COMPANY "ENGINEERING CENTRE OF FIRE ROBOTS TECHNOLOGY) 30.12.2015 | 1-14 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 28 March 2022 (28.03.2022) | 14 April 2022 (14.04.2022) |

| Name and mailing address of the ISA/ RU | Authorized officer |
|---|---|
| | |
| Facsimile No. | Telephone No. |

Form PCT/ISA/210 (second sheet) (April 2005)

**INTERNATIONAL SEARCH REPORT**

International application No.

PCT/RU 2021/000547

C (Continuation).     DOCUMENTS CONSIDERED TO BE RELEVANT

| Category* | Citation of document, with indication, where appropriate, of the relevant passages | Relevant to claim No. |
|---|---|---|
| A | WO 2007/107988 A2 (OPGAL OPTRONIC INDUSTRIES LTD et al.) 27.09.2007 | 1-14 |
| A | FR 2947732 A1 (DESAUTEL) 14.01.2011 | 1-14 |
| A | US 2004/0163827 A1 (AXONX, LLC) 26.08.2004 | 1-14 |
| A | CN 113198130 A (UNIV XIAN TECHNOLOGY) 03.08.2021 | 1-14 |

Form PCT/ISA/210 (continuation of second sheet) (April 2005)

**REFERENCES CITED IN THE DESCRIPTION**

**Patent documents cited in the description**

- WO 2319530 A
- WO 2424837 A